# EUROPEAN PATENT APPLICATION

(11) **EP 4 138 046 A1**
(43) Date of publication of application: **22.02.2023**
(21) Application number: 22190444.4
(22) Date of filing: 15.08.2022
(51) Int. Cl.: G06V 10/774, G06V 10/94

(54) **METHOD AND SYSTEM FOR CREATING TRAINING DATA**

(30) Priority: 20.08.2021 GB 202112011
(71) Applicant: Aptiv Technologies Limited, 14004 St. Michael (BB)
(72) Inventor: SCHIEBENER, David, 40822 Mettmann (DE); BARTH, Alexander, 42929 Wermelskirchen (DE)
(74) Representative: Novagraaf International SA

(57) **Abstract**

A vehicle can be fitted with a visual seat belt sensor that detects whether a seat belt is worn when a seat is occupied. Such systems can be implemented by using artificial neural networks or machine learning algorithms, which requires a large amount of training data. A method for preparing training data includes providing an image containing a path object. Starting at a first end of the path object, a segmented line object is established, the segmented line object consisting of a plurality of data points and line segments. Data points and labels are created simultaneously.

## Description

### TECHNICAL FIELD

The present disclosure relates to the field of preparing training data for machine learning systems, specifically for preparing training data for machine learning systems that can be used in vehicular applications.

### BACKGROUND

To maximize passenger safety, modern vehicles are typically fitted with seat belt sensors that detect whether a seat belt is worn when a seat is occupied. However, traditional sensors are not able to detect whether a seat belt is correctly worn by the person occupying a seat. Further, it is possible for a person to circumvent traditional sensors entirely, thereby entirely negating the functionality of such sensors.

Instead of such traditional sensors, it is possible to use visual sensors, such as cameras, to detect whether an occupant of a vehicle seat is wearing a seat belt, and in particular to determine whether the seat belt is worn correctly. To do so, it is necessary to have a system, typically referred to as a seat belt routing detection system, that is able to localize the routing of a seat belt within an image. Such systems can be implemented by using computer vision or image recognition.

Artificial neural networks are being explored in order to detect the routing of seat belts. However, neural networks, or other types of machine learning, require a large amount of training data, for example annotated or labelled ground truth data based on images.

A number of known method for creating ground truth data by labelling or annotating images exist, such as image labelling, bounding box labelling, point labelling or pixel-wise segmentation labelling. In respect of labelling annotating images with path objects, not all traditional labelling mechanisms or methodologies are applicable due to the specific requirements for such objects. In particular, in order to evaluate the routing of a path object, it is necessary to determine the specific path of the path object through the image. This renders methodologies such as image labelling, bounding box labelling or point labelling ineffective. Further, whilst pixel-wise segmentation labelling may be used, it is a laborious and time consuming process.

Therefore, there is a need for a more efficient and quicker way to generate ground truth data or training data for use in a machine learning algorithm.

### SUMMARY

The present disclosure concerns a method for preparing training data for use in training a machine learning algorithm, the method including:
in a visual output component, providing an image, the image containing a path object describing a path between a first end and a second end;
starting at a first end of the path object, establishing a segmented line object, the segmented line object consisting of a plurality of data points and a plurality of line segments defined by the data points, wherein the step of establishing a segmented line object includes
at an interaction component, creating a data point associated with a feature of the path object,
at the interaction component, creating a label associated with at least a line segment of the segmented line object, wherein the step of creating a label is performed simultaneously with the step of creating a data point, and
at the interaction component, repeating the steps of creating a data point and creating a label until a data point is created within a first threshold distance of the second end of the data object.

By simultaneously creating data points and creating labels for the line segments, the speed with which images can be annotated is greatly increased. Additionally, by using a segmented line, it is possible to trace the path of a path object in a quick and efficient manner when compared with conventional methods.

Advantageously, the location of each of the plurality of data points is within a threshold distance of a feature of the path object.

Advantageously, the steps of creating a data point and creating a label are performed by way of a single interaction by a user with the interaction component.

Advantageously, each line segment corresponds to a respective portion of the path object, and wherein the first label contains data associated with the visibility of a respective portion of the path object.

Advantageously, the user performs a first interaction at the interaction component if the respective portion of the path object is visible, and wherein the user performs a second interaction at the interaction component if the respective portion of the path object is not visible.

Advantageously, the path object defines two apparent sides boundaries, said side boundaries defining both sides of the path object, and each of the data points is positioned such that the line defined by said data points is positioned within the apparent boundaries of the path object.

Advantageously, the first data point is positioned within a second threshold distance of the first end of the path object.

The present disclosure additionally relates to a computer program comprising instructions which, when the program is executed by a computer, cause the computer to carry out a method as set out above

The present disclosure also relates to a non-transitory computer readable medium including program instructions for causing a computer system to carry out a method as set out above.

The present disclosure additionally relates to a computer system, the computer system having at least a visual output component, an interaction component and a processing component, the computer system being operable to carry out a method as set out above.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a method for preparing training data.
Figure 2 illustrates schematically the method of Figure 1.
Figure 3 shows an exemplary computer system in which the methods of the present disclosure may be implemented.
Figure 4 illustrates an example of the method for preparing training data described in Figure 1.
Figure 5 shows schematically the method of Figure 4.

### DETAILED DESCRIPTION

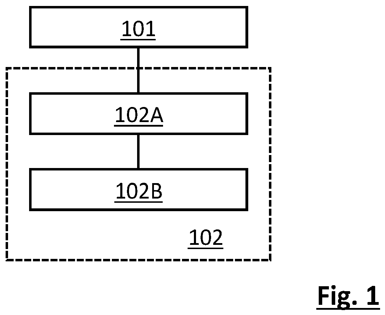

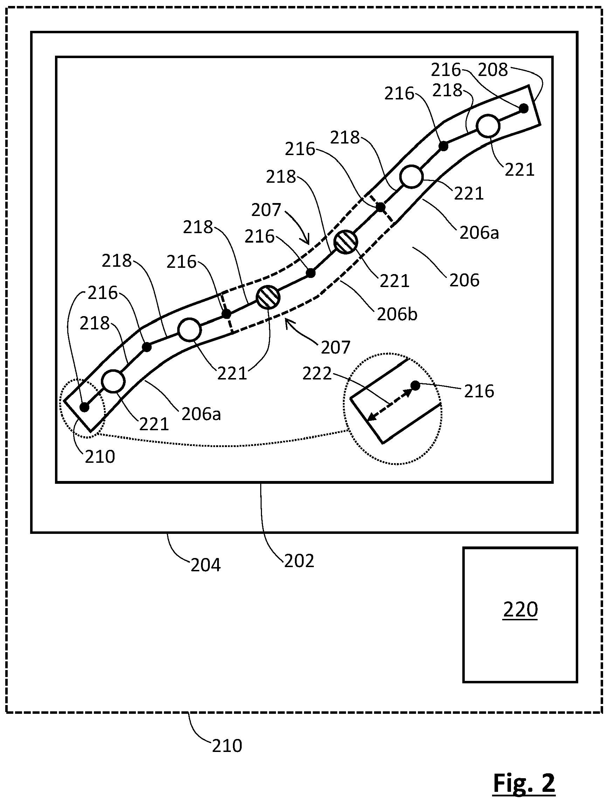

Figure 1 and Figure 2 show an exemplary method for preparing training data for use in training a machine learning algorithm.

In a first step 101, an image 202 is provided in a visual output component 204, the image containing a path object 206 describing a path between a first end 208 and a second end 210. The image may be provided in any suitable way to the user. For example, the visual output component may be a visual display unit of a computing system 212.

The image may contain any suitable number of path objects of interest. In some examples, the image depicts the interior of a vehicle cabin with one or more seats that may be occupied by persons, each of which may include or have attached a seat belt for an occupant to use. For unoccupied seats, any seat belts will typically be in a stored or rolled-up configuration. When in use, seat belts are typically attached to the vehicle by way of an attachment element (such as a buckle). One of the most common seat belt types in usage in vehicles is the so-called 'three point seat belt', which attaches to the vehicle in two locations on one side of an occupant's seat. Once seated, the occupant attaches a buckle on the seat belt to an attachment point on the opposite side of their seat.

It will be appreciated that, whilst discussed in context of a seat belt, the present method is equally applicable to other path objects. Purely for exemplary purposes, the present method could, in principle, be applied to road markings.

Purely for purposes of clarity and for ease of explanation, an illustrative path object 206 is shown in the present example. The path object 206 includes a number of portions. In the present example, the path object includes two visible portions 206a and an occluded portion 206b.

The path object defines two apparent side boundaries 207 which define both sides of the path object.

In a second step 102, starting at the first end 208 of the path object 206, a segmented line object 214 is established, the segmented line object consisting of a plurality of data points 216 and a plurality of line segments 218 defined by the data points.

The step of establishing a segmented line object may be performed in any suitable manner. In the present example, the step of establishing a segmented line object includes a plurality of establishing steps. Each of the establishing steps may be carried out in a suitable fashion and by way of a suitable element or component. It will be appreciated that the establishing steps described in the present example are exemplary and that variations or alternate implementations may be envisaged within the scope of the present disclosure.

In a first establishing step 102A, a data point 216 associated with a feature of the path object 206 is created at an interaction component 220. The data point is created in a suitable fashion by way of a suitable mechanism, such as, without limitation, a user interaction with the interaction component 220 (e.g., one or more of a button press, a mouse click, a touch gesture or a user gesture).

The data point 216 may be positioned in any suitable position. In some examples, each of the data points 216 is positioned such that the line segments 218 defined by said data points is positioned within the apparent side boundaries 207 of the path object. In the present example, the line segments 218 are linear. However, it will be appreciated that the line segments may be of any suitable type (e.g., polynomials, splines, Bezier curves, hyperbolas, ellipses or other algebraic curves). In such instances, some or all of the data points may be positioned outside the apparent side boundaries 207 in order to ensure that the line segments 218 are positioned within the apparent side boundaries 207.

In a second establishing step 102B, a label 221 associated with at least a line segment 218 of the segmented line object 214 is created at the interaction component, wherein the step of creating a label is performed simultaneously with the step of creating a data point 216. The label 221 may be created in a suitable fashion by way of a suitable mechanism. In some examples, the first establishing step is triggered by the user interaction used to trigger the first establishing step. In some examples, the second establishing step is triggered by a separate user interaction to the one that is used to trigger the first establishing step. In some examples, the second establishing step is triggered by the completion of the first establishing step.

All or some of the labels 221 may contain any suitable information or data content. In some examples, each label includes an indicator of the visibility of the line segment with which it is associated. In an example, a first label is created and associated with any line segments 218 that are located in proximity to visible portions 206a of the path object 206, and a second label is created and associated with any line segments 218 that are located in proximity to occluded or invisible portions 206b of the path object 206. In some examples, some or all of the labels 221 contain additional or alternate data, including (but not limited to): further gradation of visibility of the path object (e.g., not visible, partially visible, fully visible); indications whether the respective portion of the path object is routed correctly; indications relating to the status or properties of the respective portion of the path object; or indications relating to interaction between the path object and other objects in the image (e.g., if the path object is a seat belt, whether the respective portion of the seat belt is resting against the torso or the hip of the person).

In an illustrative example, the first and second establishing steps are performed by way of a single user interaction as described above. In this example, the first interaction is a first button press from a suitable interaction component 220 (such as a pointing device or input device attached to the computing system 210). In this example, the second interaction is a second button press, either from the same interaction component as the first button press or a different interaction component. It will be appreciated that, whilst only a first interaction and a second interaction are illustrated in the present example, it is in principle possible to have any suitable number of interactions using any suitable number of interaction components.

In this illustrative example, the user performs a first interaction at the interaction component if the respective portion of the path object is visible, and the user performs a second interaction at the interaction component if the respective portion of the path object is not visible. In this example, the first interaction creates a data point and a first label, the first label containing data indicating that the respective portion of the path object is visible. Similarly, the second interaction creates a data point and a second label, the second label containing data indicating that the respective portion of the path object is not visible.

The first and second establishing steps are repeated at the interaction component until a data point 216 is created within a first threshold distance 222 of the second end of the path object 206.

The first threshold distance may be determined in any suitable fashion. In some examples, the method includes a sub-step of determining whether a data point is created within the first threshold distance of the second end of the path object. In some examples, the sub-step includes ending the method automatically if the particular data point is within the first threshold distance.

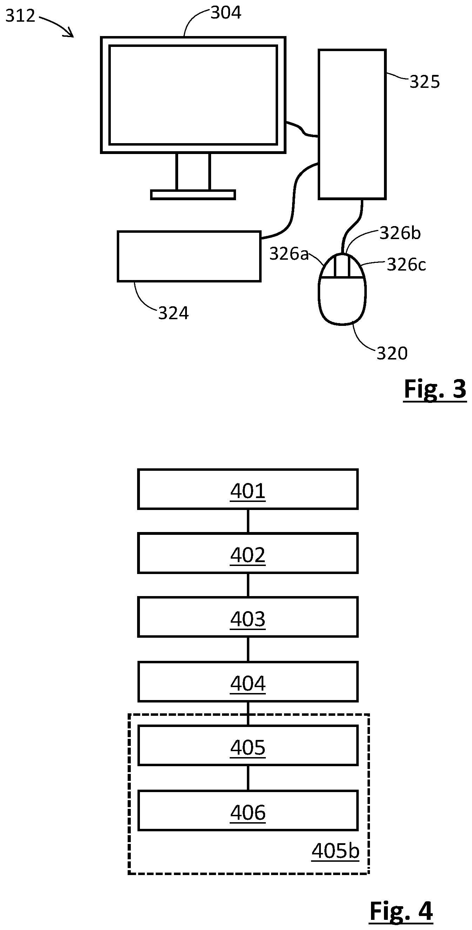

In the above example, the method has been described in general terms. It will be appreciated that this method may be implemented in a number of specific ways. Figure 3 shows a specific example of a system in which the method discussed in the above Figures may be implemented.

In this example, the method is performed by a user interacting with a computer system 312 (such as a desktop computer, a laptop computer, tablet device or smartphone).

The computer system 312 has a display 304 and a hand-held pointing device 320 (e.g., a mouse, touchpad or trackball). The computer system may have additional interface or input devices 324, for example a keyboard, with which the user may interact with the computer system or software thereon. The computer system additionally has a number of operational components 325, e.g., a central processing unit, memory components, and/or other such components that enable the computer system to carry out operations.

During operation, the display 304 is used to display information to the user. In the context of the present system, the display shows to the user an image to be interacted with. The display may additionally display other elements, e.g., (without limitation) UI elements, or other elements relating to the operation of the computer system or its component parts.

The hand-held pointing device may be of any suitable type to enable a user to provide spatial data to the computer system. The hand-held pointing device may further be configured or operable to provide additional inputs to the computer system. It will be appreciated that, whilst reference is made to a hand-held pointing device, some pointing devices may not be hand-held or may not be a separate component. In some examples, the pointing device may be integrated into the system or a component thereof (e.g., a touch-sensitive display or a gesture device). In some examples, a plurality of pointing or input devices may be used in combination. Purely for purposes of conciseness and ease of explanation, reference will be made in the following to a hand-held pointing device, although this should be taken to mean any suitable pointing device or combination of a plurality of pointing or input devices.

In the present example, the hand-held pointing device 320 is a computer mouse with at least three buttons 326a, 326b, 326c. Conventionally, computer mice have two main or primary buttons that the user operates to interact with the computer. Further, computer mice typically have a third (or middle) button, which is in some examples formed as a scroll wheel. In instances where the third button is a scroll wheel, the scroll wheel commonly functions in a manner similar to a button (i.e., the scroll wheel may be 'pressed' analogously to a button). Typically, button presses on the primary buttons are referred to as 'left click' (when the user presses the lefthand primary button of the mouse), and a 'right click' (when the user presses the right-hand primary button). Further, button presses on the middle button or scroll wheel are typically referred to as a 'middle click'.

It should be noted that not all pointing devices have distinct primary buttons. However, pointing devices are typically provided with means for providing several types of input, which are functionally equivalent to a 'left click', 'right click', and a 'middle click'.

It should further be noted that, in some examples, the pointing device has additional buttons (or functional equivalents). Such additional buttons may be used to provide additional control inputs during the performance of the methods. Further, in some examples, the system includes one or more components or peripherals (e.g., the additional interface or input devices 324) that are used to provide additional control inputs during the performance of the methods.

Purely for purposes of conciseness and clarity, reference will be made in the following to 'left click', 'right click' and 'middle click', although it will be understood that these terms are not intended to be limiting but to describe different types of input provided by the user by way of the respective pointing device. Further, it will be appreciated that, whilst three specific inputs are referred to, additional or alternative inputs can be defined and used in one or more of the methods described herein. Purely for illustrative purposes, in some examples, a plurality of inputs are defined, wherein some inputs use only one input device and wherein other inputs use a combination of input devices (e.g., a combination of one or more mouse clicks and keyboard inputs).

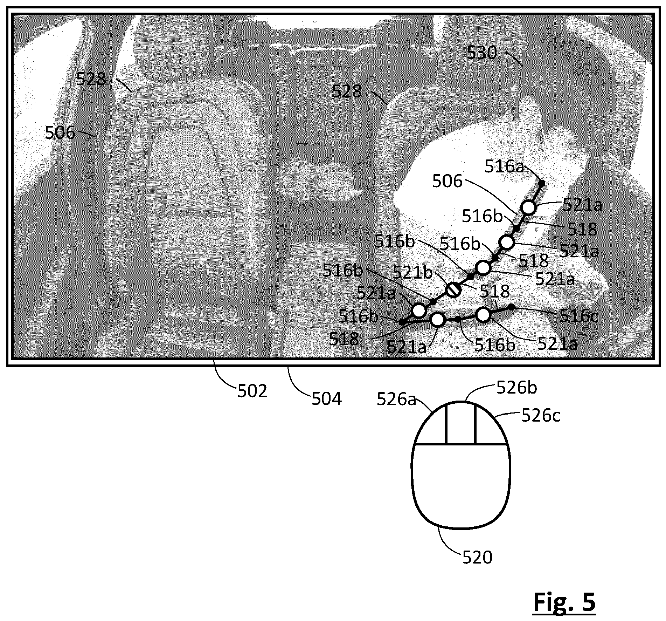

Figure 4 and Figure 5 illustrate an example of the above-described method implemented in a system such as the one described in Figure 3. For ease of comparison with preceding Figures, elements of Figure 5 similar to corresponding elements of the preceding Figures are labelled with reference signs similar to those used in these Figures, but with prefix "5". It will be appreciated that, purely for purposes of clarity, some of the features or elements of the systems described in the preceding Figures are not described in the following, but that such features or elements may nevertheless be present.

In a first step 401, an image 502 is provided on a display 504 to a user. In the present example, the image displays an interior of a vehicle, the interior having a number of seats 528, with an occupant 530 in one of the seats. Within the vehicle interior, there is at least one path object 506. In the present example, the path object is a seat belt. In the present example, the vehicle interior has two seat belts 506, one for each of the front seats. For purposes of conciseness, the method will be discussed with reference to only a single seat belt, although it will be appreciated that the method can be implemented on any suitable number of seat belts or path objects within the image.

In a second step 402, the user creates a first data point 516a within a second threshold distance (not shown) of a first end of the path object 516. The user utilizes the pointing device 520 to place a cursor in the desired location. Once the cursor is in a suitable location, the user creates the data point by a first button press on the pointing device (e.g., left-clicking the first button 526a). For the first data point 516a, no data label is created.

In a third step 403, the user creates a further data point 516b within a threshold distance of a feature of the path object. Any suitable or relevant feature may be used. Suitable features of the path object include, without limitation, bends, curves or changes in visibility (e.g., transitions between a visible portion and an occluded or invisible portion of the path object).

Simultaneously, the user creates a label 521 associated with at least a line segment 518 of the segmented line object. The label is created by either a first button press (e.g., a left click) or a second button press (e.g., a right click on the second button 526c). If the user performs a first button press, a first label 521a is associated with the line segment, and if the user performs a second button press, a second label 521b is associated with the respective line segment. In the present example, each data label 521 is associated with the line segment 518 defined by a particular data point and the preceding data point. It will, however, be appreciated that this is for exemplary purposes, and that any number of labels may be created, each of which may be associated with any relevant line segment or line segments.

As discussed above, the labels 521 may contain any suitable or relevant data or information content. In the present example, each first label 521a contains a status flag that indicates that the line segment 518 with which it is associated is visible in the image . Similarly, each second label 521b contains a status flag that indicates that the line segment 518 with which it is associated is not visible or otherwise occluded (for example if a portion of the person's body is in the way).

In a fourth step 404, the user repeats the step of creating a further data point 516. The user selects a suitable feature of the path object 506, such as a transition between a visible portion and an occluded or invisible portion of the path object.

The fourth step 404 may be repeated any number of relevant times. The number of repetitions may depend on the properties or characteristics of the seat belt. For example, a seat belt for an unoccupied seat may be substantially straight, and will therefore require only a low number of data points since it is in a retracted or stored position.

In a fifth step 405, the user creates a data point 516c within a first threshold distance (not shown) of the second end of the path object 506. Simultaneously, as discussed above, the user creates a label 521 associated with at least a line segment 518 of the segmented line object 518. The label is created by either a left click or a right click. If the user performs a left click, a first label 521a is associated with the line segment, and if the user performs a right click, a second label 521b is associated with the line segment 518.

In a sixth step 406, the user indicates that no further data points are to be added to the segmented line object 514. The indication may be performed in any suitable fashion. In some examples, the indication is performed by way of a button press. In an example, the indication is performed by way of a third button press (e.g., a 'middle click' on button 526b).

It will be appreciated that, whilst the fifth and sixth steps have been described separately and consecutively, it is in principle possible for these steps to be performed simultaneously or as part of a single step 405b. In one example, the fifth and sixth steps are performed by way of a 'middle click'.

It will be appreciated that, whilst only a single path object has been described in the above example, the present method is equally applicable in cases where an image contains a plurality of path objects. In such instances, the above-described method is repeated for each path object in the image.

It will also be appreciated that, whilst three different user inputs (left click, middle click and right click) and two different labels have been described in the present example, these are purely for illustrative and exemplary purposes. As discussed in the above, implementations wherein additional user inputs or labels can be used may easily be envisaged within the scope of the present disclosure. Purely by way of example, whereas the present example labels line segments as: visible; or occluded, it is possible to label line segments as: visible; partly visible; or occluded. As a further example, line segments may be labelled as belonging to the upper portion of the seat belt (i.e., the portion covering the person's torso) or as belonging to the lower portion of the seat belt (i.e., the portion going across the person's waist).

Further, it will be appreciated that additional inputs or types of inputs may be defined. For example, one or more inputs can be defined to automate and/or facilitate one or more aspects or steps of the above methods. Purely for illustrative purposes, in an example, an input is defined to copy a segmented line object from a previous image. This is particularly advantageous in situations where a path object does not change between subsequent images (e.g., if a seat belt is unused).

While specific embodiments of the systems and methods have been described above, it will be appreciated that embodiments of the systems and methods may be practiced otherwise than as described. For example, an embodiment of the present disclosure may take the form of a computer program containing one or more sequences of machine-readable program instructions describing a method as disclosed above, or a data storage medium or module having such a computer program stored therein. Purely for exemplary purposes, the machine-readable program instructions are stored in a storage module related to the vehicle, such as volatile memory, e.g., ROM, RAM, etc., and/or non-volatile memory, e.g., Flash, NAND, etc., that is permanently or removably integrated in a computer system or connectable to the computer system, e.g., via the 'cloud', and can be executed by a suitable component of the computer system (e.g., a processing component).

## Claims

1. A computer-implemented method for preparing training data for use in training a machine learning algorithm, the method comprising:
in a visual output component, providing an image, the image containing a path object describing a path between a first end and a second end;
starting at a first end of the path object, establishing a segmented line object, the segmented line object consisting of a plurality of data points and a plurality of line segments defined by the data points, wherein the step of establishing a segmented line object comprises
at an interaction component, creating a data point associated with a feature of the path object,
at the interaction component, creating a label associated with at least a line segment of the segmented line object, wherein the step of creating a label is performed simultaneously with the step of creating a data point, and
at the interaction component, repeating the steps of creating a data point and creating a label until a data point is created within a first threshold distance of the second end of the path object.

2. A computer-implemented method according to claim 1, wherein the location of each of the plurality of data points is within a threshold distance of a feature of the path object.

3. A computer-implemented method according to claim 1 or claim 2, wherein steps of creating a data point and creating a label are performed by way of a single interaction by a user with the interaction component.

4. A computer-implemented method according to any of claims 1 to 3, wherein each line segment corresponds to a respective portion of the path object, and wherein the first label contains data associated with the visibility of a respective portion of the path object.

5. A computer-implemented method according to claim 4, wherein the user performs a first interaction at the interaction component if the respective portion of the path object is visible, and wherein the user performs a second interaction at the interaction component if the respective portion of the path object is not visible.

6. A computer-implemented method according to claim 5, wherein the first interaction is a first button press, and wherein the second interaction is a second button press.

7. A computer-implemented method according to claim 5 or claim 6, wherein the first interaction creates a first label, the first label comprising data indicating that the respective portion of the path object is visible, and wherein the second interaction creates a second label, the second label comprising data indicating that the respective portion of the path object is not visible.

8. A computer-implemented method according to any of claims 1 to 7, wherein the path object defines to apparent sides boundaries, said side boundaries defining both sides of the path object, and
wherein each of the data points is positioned such that the line segments defined by said data points is positioned within the apparent boundaries of the path object.

9. A computer-implemented method according to any of claims 1 to 8, wherein the first data point is positioned within a second threshold distance of the first end of the path object.

10. A computer-implemented method according to any of claims 1 to 9, wherein the data point within the first threshold distance of the second end of the path object is created by way of a third interaction.

11. A computer-implemented method according to claim 10, wherein the third interaction is a third button press.

12. A computer program comprising instructions which, when the program is executed by a computer, cause the computer to carry out the method of any of claims 1 to 11.

13. A computer readable medium including program instructions which, when executed by a computer, cause the computer to carry out the method of any of claims 1 to 11.

14. A computer system having at least a visual output component, an interaction component and a processing component, the computer system being operable to carry out the method of any of claims 1 to 11.
